# EUROPÄISCHE PATENTANMELDUNG

(11) **EP 0 752 339 A1**
(43) Veröffentlichungstag der Anmeldung: **08.01.1997**
(21) Anmeldenummer: 96110278.7
(22) Anmeldetag: 26.06.1996
(51) Int. Cl.: B60P 1/26

(54) **Betätigungseinrichtung für die Heckklappe eines Ladewagens**

(30) Priorität: 04.07.1995 DE 29510800 U
(71) Anmelder: Maschinenfabrik Kemper GmbH, D-48703 Stadtlohn (DE)
(72) Erfinder: Brüning, Ulrich, 48653 Coesfeld (DE)
(74) Vertreter: Busse & Busse Patentanwälte

(57) **Zusammenfassung**

Ein Ladewagen zur Beförderung von insbesondere Erntegut ist mit einer mittels einer Antriebseinrichtung (5) aus einer Schließstellung in eine Offenstellung beweglichen Heckklappe (2) versehen. Die Heckklappe (2) ist einenends in ihrem oberen Randbereich über eine jeweilige heckseitige Gelenkstelle (6) mit einem oberen Rahmenteil (8) verbunden, das seinerseits im Bereich der jeweiligen Seitenwandteile (4) des Wagenaufbaus von einem Hauptschwenklager (9) abgestützt ist. Anderenends ist die Heckklappe (2) in ihrem unteren Endbereich (38) mit in bodenseitige Gegenglieder (10) einführbaren und aus diesen lösbaren Schließteilen (12) versehen. Die Antriebseinrichtung (5) ist als ein in Richtung des oberen Rahmenteils (8) wirkendes Hebeorgan (13) ausgebildet, das an einem Schwenkriegel (15) angreift. Der Schwenkriegel (15) ist in Schließstellung der Heckklappe (2) an einem aufbaufesten Anschlagteil (16) in einer Verriegelungsstellung gehalten und bildet nach einem Herausschwenken aus dieser ein Druckglied zum Anheben der Heckklappe (2) in die Offenstellung.

## Beschreibung

Die Erfindung betrifft einen Ladewagen zur Beförderung von insbesondere Erntegut, nach dem Oberbegriff des Anspruchs 1.

Bekannte Ladewagen zur Beförderung von Entegut sind im Bereich ihrer Wandungen mit einer den hinteren Bereich des Wagenaufbaus verschließenden Heckklappe versehen, die über eine automatische Antriebseinrichtung geöffnet werden kann, woraufhin beispielsweise im Innenbereich des Wagenaufbaus befindliches Erntegut herausgefördert bzw. -gekippt wird. Als Antriebseinrichtung für die Bedienung der Heckklappe sind dabei insbesondere beidseits im Bereich der Seitenwandteile abgestützte doppeltwirkende Hydraulikzylinder als Kraftheber vorgesehen, die mit umschaltbaren Druckrichtungen sowohl den Öffnungsvorgang als auch jeweils in der entgegengesetzten Druckrichtung den Schließvorgang bewirken. Die Antriebseinrichtungen wirken dabei mit einem an der Heckklappe angreifenden Umlenkgestänge zusammen, das mit einer Vielzahl von Bauteilen sowohl einen nachteilig hohen konstruktiven Aufwand als auch zur Bewegung des insgesamt hohen Gewichts der Heckklappe entsprechend hohe Leistungsparameter aufweisende Hydraulikzylinder erfordert.

Der Erfindung liegt die Aufgabe zugrunde, einen Ladewagen zu schaffen, dessen Heckklappe eine mit geringem technischem Aufwand verbundene Antriebseinrichtung aufweist, die bei insgesamt geringem Raum- und Leistungsbedarf mit einfachen Mitteln eine zuverlässige und gegen unbeabsichtigte Verschwenkungen gesicherte Öffnungs- und Schließstellung gewährleistet.

Ausgehend von einem Ladewagen nach dem Oberbegriff des Anspruches 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 15 verwiesen.

Der erfindungsgemäß ausgebildete Ladewagen weist im Bereich der Heckklappe eine konstruktiv vereinfachte Bauteilgruppe auf, deren Antriebseinrichtung mit einem lediglich in Richtung des oberen Rahmenteils wirkenden, vorzugsweise druckmittelbetätigten Hebeorgan versehen ist, wobei dieses mit einem Schwenkriegel am die Heckklappe tragenden Rahmenteil so angreift, daß die Öffnungs- und Schließbewegung der Heckklappe unter Vermeidung aufwendiger, störanfälliger Gestellteile möglich ist.

Beim Schließen der Heckklappe können die Bauteile der Antriebsbaugruppe über eine einfache Freigabe bzw. Drucklosstellung des Hebeorgans dadurch in die Schließstellung bewegt werden, daß die über das Hebeorgan abgebremste Gewichtskraft der Heckklappe wirksam wird und diese auf einer über die Anlenkpunkte der Bauteilgruppe gesteuerten Bahnkurve derart verschwenkt wird, daß in der Schließstellung eine sichere Verriegelung der Heckklappe mit den Seiten- und/oder Bodenwandteilen des Wagenaufbaus erreicht ist.

Die Antriebseinrichtung ist insgesamt mit geringem technischem Aufwand verbunden und über die wenigen Bauteile kann das Gesamtgewicht der Heckklappe soweit reduziert werden, daß die Leistungsanforderungen an das insbesondere von einem einfachwirkenden Kraftheber gebildete Hebeorgan gering sind und damit die Gestehungskosten des Ladewagens vorteilhaft gesenkt werden können.

Weitere Einzelheiten und Vorteile der Erfindung ergeben sich aus der nachfolgenden Beschreibung und der Zeichnung, die ein Ausführungsbeispiel eines erfindungsgemäßen Ladewagens veranschaulicht. In der Zeichnung zeigt:
- Fig. 1: eine perspektivische Seitenansicht des Ladewagens im Bereich seiner Heckklappe,
- Fig. 2: eine Seitenansicht des Ladewagens gemäß Fig. 1 mit die Öffnungsstellung und die Bewegung in die Schließstellung veranschaulichenden Bewegungsphasen der Heckklappe,
- Fig. 3: eine vergrößerte Einzeldarstellung der Heckklappe im Bereich einer Antriebsvorrichtung in Schließstellung,
- Fig. 4: eine Einzeldarstellung der Heckklappe gemäß Fig. 3 in einer anfänglichen Öffnungsphase, und
- Fig. 5: einen vergrößerten Vertikalschnitt der Antriebsvorrichtung im Verbindungsbereich mit einem Rahmenteil.

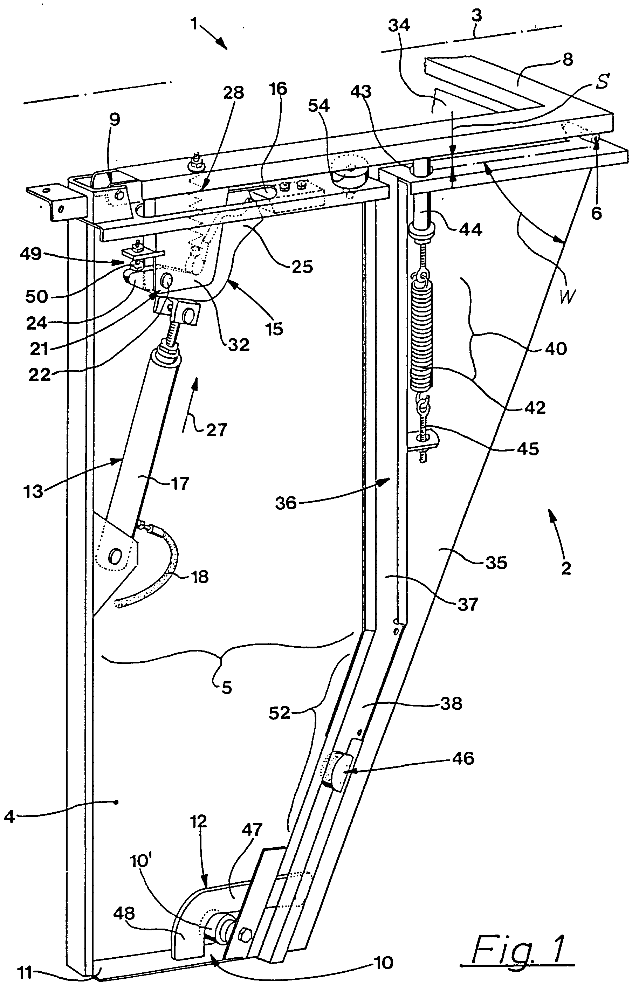

In Fig. 1 ist in einer perspektivischen Seitenansicht der Heckbereich eines insgesamt mit 1 bezeichneten Ladewagens veranschaulicht, dessen teilweise geschnittene dargestellte Heckklappe 2 sich beidseits einer Fahrzeuglängsachse 3 bis in den Bereich jeweiliger Seitenwandteile 4 des Wagenaufbaus erstreckt. Die zeichnerischen Darstellungen und der nachfolgende Beschreibung sind jeweils auf die Bauteile im Bereich eines der Seitenwandteile 4 bezogen, wobei es sich versteht, daß symmetrisch zur Fahrzeuglängsachse 3 auf der gegenüberliegenden Seite eine im wesentlichen gleiche Bauteilanordnung vorgesehen ist.

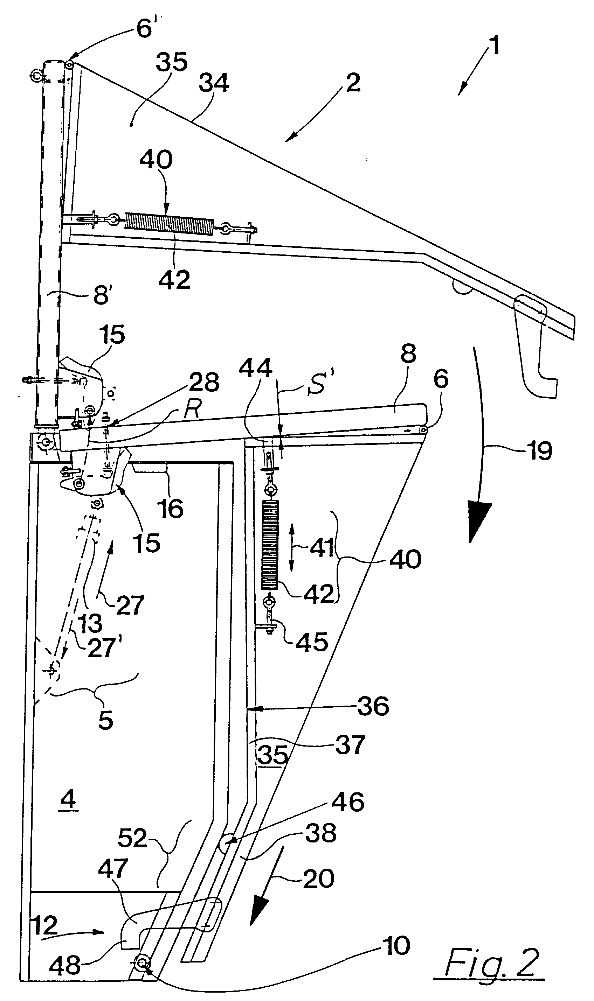

Die Heckklappe 2 ist im Bereich des Seitenwandteiles 4 mit einer Antriebseinrichtung 5 versehen, mit der eine automatische Bewegung in eine Schließ- bzw. Öffnungsstellung (Fig. 2) möglich ist.Die Heckklappe 2 ist dabei einenends in ihrem oberen Randbereich über eine heckseitige Gelenkstelle 6 mit einem oberen Rahmenteil 8 verbunden, das seinerseits im Bereich der jeweiligen Seitenwandteile 4 des Wagenaufbaus von einem Hauptschwenklager 9 abgestützt ist. Anderenends ist die Heckklappe 2 in ihrem unteren Endbereich mit Schließteilen 12 versehen, die in im Bereich eines Aufbaubodens 11 befindliche Gegenglieder 10 einführbar bzw. aus diesen lösbar sind.

In erfindungsgemäßer Ausführung ist die Antriebseinrichtung 5 der Heckklappe 2 von einem in Richtung des oberen Rahmenteils 8 wirkenden Hebeorgan 13 gebildet, an dessen in Bewegungsrichtung vorderem Bereich ein Schwenkriegel 15 vorgesehen ist (Fig. 1).

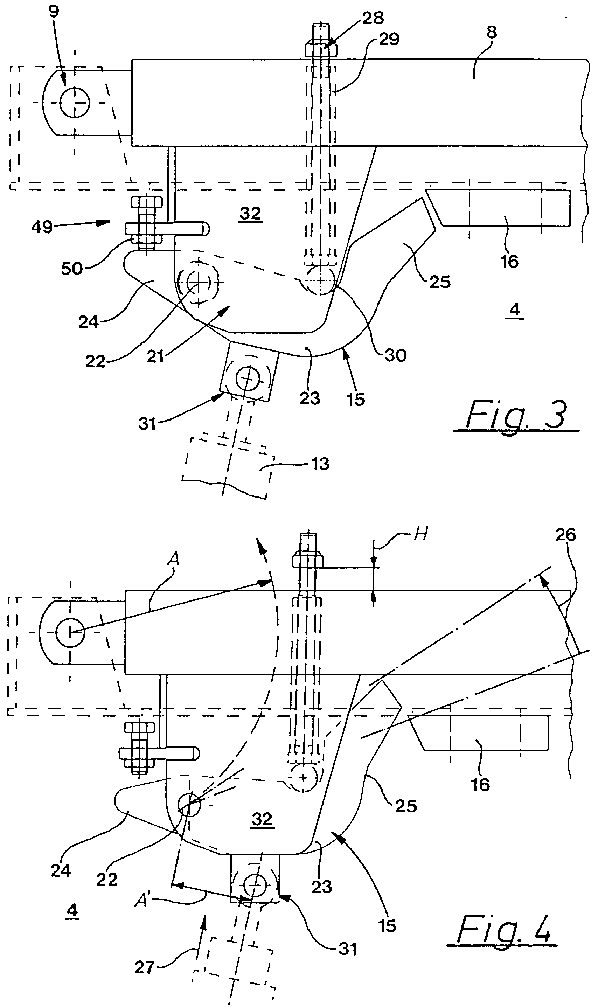

Der Schwenkriegel 15 ist in der Schließstellung der Heckklappe 2 (Fig. 3) an einem aufbaufesten Anschlagteil 16 in einer Verriegelungsstellung gehalten, und nach einem Herausschwenken aus dieser Verriegelungsstellung (Fig. 4) bildet der Schwenkriegel ein Druckglied zum Anheben der Heckklappe 2 in die Offenstellung (Fig. 2, im oberen Bereich).

Mit dieser konstruktiv einfachen Bauteilgruppe kann die Heckklappe 2 mit vorteilhaft wenigen Einzelteilen bewegt werden, so daß die insgesamt kompakte Bauteilanordnung eine weitgehend störunanfällige Bewegung der Heckklappe 2 und einen sicheren Verschluß des Ladewagens 1 ermöglicht.

Das in Richtung des Rahmenteils 8 wirksame Hebeorgan 13 ist in zweckmäßiger Ausführung von einem einfachwirkenden Kraftheber 17 mit einem einzigen Hydraulikanschluß 18 gebildet, so daß bei einer Druckbeaufschlagung über ein entsprechendes Förderorgan (nicht dargestellt) die vorbeschriebenene Hubbewegung der Heckklappe 2 im Bereich des Schwenkriegels 15 eingeleitet und bei einer Drucklosschaltung des Hebeorgans 13 die in Fig. 2 angedeutete Schließbewegung (Pfeile 19 und 20) unter Wirkung des Eigengewichts der Bauteile im Bereich der Heckklappe 1 erreichbar ist.

Die vergrößerten Ausschnittsdarstellungen gemäß Fig. 3 und Fig. 4 verdeutlichen, daß der Schwenkriegel 15 über ein Verbindungslager 21 mit dem Rahmenteil 8 verbunden ist und dabei das Verbindungslager 21 im Nahbereich des Hauptschwenklagers 9 von der Unterseite des Rahmenteils 8 in Richtung zum Hebeorgan 13 vorragt und damit der Abstand A zwischen dem Hauptschwenklager 9 und einem Drehpunkt 22 einen Schwenkradius R definiert (Fig. 2).

Der Schwenkriegel 15 ist in vorteilhafter Ausführung von einem Winkelhebel 23 gebildet, der einerseits einen mit dem Hebeorgan 13 verbundenen Stützarm 24 aufweist und andererseits in Schließstellung (Fig. 3) das aufbaufeste Anschlagteil 16 mit einem Riegelarm 25 hintergreift. In Fig. 4 ist die Entriegelung des Schwenkriegels 15 in einer ersten Bewegungsphase (Pfeil 26) verdeutlicht, wobei die Hubbewegung (Pfeil 27) des Hebeorgans 13 als eine Schwenkbewegung des Schwenkriegels 15 (entgegen dem Uhrzeigersinn bei der Darstellung gemäß Fig. 4) um den Drehpunkt 22 wirksam wird. Hierzu greift das Hebeorgan 13 über eine Schwenklagerverbindung 31 am Stützarm 24 mit einem Abstand A' vom Drehpunkt 22 an.

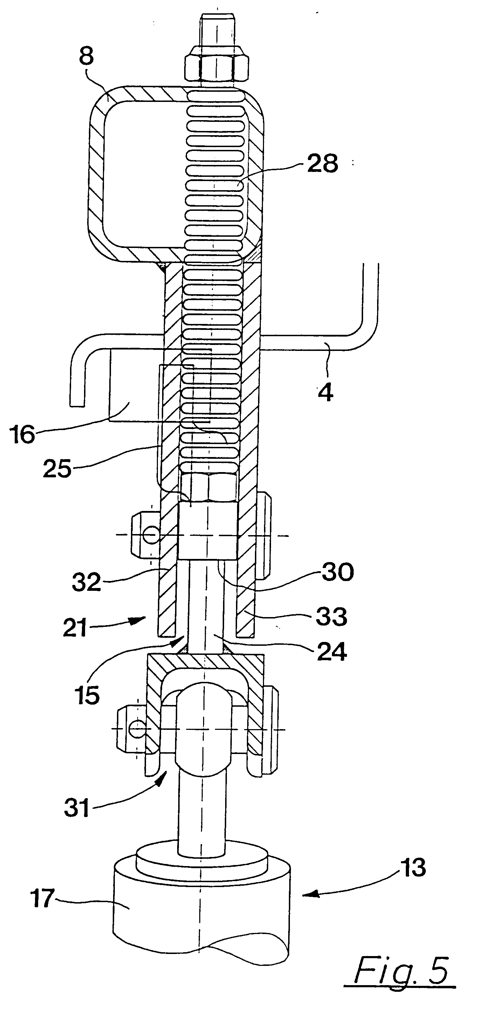

Bei der vorbeschriebenen Hub- bzw. Schwenkbewegung im Bereich des Schwenkriegels 15 wird gleichzeitig ein mit dem Winkelhebel 23 im Bereich zwischen dem Riegelarm 25 und dem Stützarm 24 verbundenes Federspeicherelement 28 vorgespannt, wobei das Federspeicherelement 28 in zweckmäßiger Ausführung von einer in vertikaler Einbaulage am Rahmenteil 8 höhenbeweglich (Höhe H, Fig. 4) festgelegten Druckfeder 20 gebildet ist, die mit ihrem unteren freien Ende an einer Bogenkontur 30 des Winkelhebels 23 schwenkbeweglich abgestützt ist (Fig. 5).

Die vergrößerte Rückansicht der Antriebsvorrichtung 5 im Verbindungsbereich mit dem Rahmenteil 8 in Fig. 5 verdeutlicht, daß das Verbindunglager 21 einen von zwei Stützplatten 32, 33 gebildeten Lagerbock umfaßt, wobei der Stützarm 24 des Schwenkriegels 15 zwischen den beiden Stützplatten 32, 33 im Bereich des Drehpunktes 22 schwenkbeweglich gehalten ist.

Die Heckklappe 2 (Fig. 1) schließt in ihrer Schließstellung, ausgehend von der heckseitigen Gelenkstelle 6 mit ihrer Rückwand 34 zum Rahmenteil 8 hin einen spitzen Winkel (Pfeil W) ein und gleichzeitig weist die Heckklappe 2 seitliche Klappenwände 35 auf, deren vorderer Rand 36 einen oberen, im wesentlichen senkrechten Randbereich 37 und einen unteren, zum Aufbauboden 11 geneigten Randbereich 38 umfaßt.

Die Heckklappe 2 und das Rahmenteil 8 sind in vorteilhafter Ausführung im Bereich zwischen dem Hauptschwenklager 9 und der Gelenkstelle 6 zusätzlich über ein Federglied 40 miteinander verbunden. Das Federglied 40 weist dabei eine im wesentlichen parallel zum oberen Randbereich 37 der seitlichen Klappenwand 35 verlaufenden Wirkrichtung (Pfeil 41) auf, wobei das Federglied zwischen dem Rahmenteil 8 und der seitlichen Klappenwand 35 abgestützt ist.

Das Federglied 40 ist zweckmäßig als eine Schraubenzugfeder 42 ausgebildet, die einenends im oberen Bereich mit einem eine heckklappenseitige Führungsöffnung 43 durchgreifenden Führungsglied 44 am Rahmenteil 8 und anderenends über ein Einstellglied 45 für die Vorspannung der Schraubenzugfeder 42 an der Heckklappe 2 festgelegt ist.

Das Federglied 40 bildet eine Überlastsicherung beim Entladen, indem die Heckklappe 2 Belastungsspitzen durch Verschwenken um die Gelenkstelle 6 elastisch nachgeben kann.

Die Heckklappe 2 ist außerdem im unteren Randbereich 38 mit einer nahe dem bodenseitigen Schließteilen 12 angeordneten und in Fahrzeuglängsrichtung vorstehenden Stützeinrichtung 46 versehen, die in Schließstellung (Fig. 1) randseitig am Seitenwandteil 4 des Wagenaufbaus so anliegt, daß die Heckklappe 2 einen definierten Anlagebereich aufweist.

Das im unteren Randbereich 38 der Klappenwand 35 befindliche Schließteil 12 ist dabei in zweckmäßiger Ausführung als ein parallel zur Seitenwand 4 von der Heckklappe 2 abragender Winkelprofilhaken 47 ausgebildet, dessen freier Schenkel 48 das bodenseitige Gegenglied 10 im Bereich einer Stützrolle 10' hintergreift.

Die Darstellung gemäß Fig. 3 und 4 verdeutlicht ein für den automatischen Verschluß der Heckklappe 2 wesentliches Bauteil in Form eines Fühlerelementes 49, wobei der Schwenkriegel 15 im Bereich seines Stützarmes 24 mit dem am Verbindungslager 21 abgestützten Fühlerelement 49 in Wirkverbindung steht. Das Fühlerelement 49 oder der Stützarm 24 kann in zweckmäßiger Ausführung als ein mit einer optischen und/oder akustischen Anzeigeeinheit (nicht dargestellt), beispielsweise im Bereich des Zugfahrzeugs für den Ladewagen 1, verbundener Näherungsschalter 50 ausgebildet sein, mit dem die entsprechende Schließstellung des Schwenkriegels 15 kontrolliert wird.

Die Bewegungsphasen-Darstellungen gemäß Fig. 2 verdeutlichen die jeweilige Bedienung der erfindungsgemäßen Heckklappe 2 und das Zusammenwirken der vorbeschriebenen Bauteile. Das zur Leerung des Ladewagens 1 in die obere Ausfahrstellung bewegte Hebeorgan 13 wird dabei nach Abschluß des Entladevorgangs drucklos geschaltet (Pfeil 27', Fig. 2), so daß das Druckmedium, beispielsweise über ein entsprechend eingestelltes Drosselventil (nicht dargestellt), unter Wirkung des Gewichts der Heckklappenbauteile über die Hydraulikleitung 18 aus dem Kraftheber 14 gedrückt und damit die Heckklappe 2 eine Schwenkbewegung nach unten (Pfeil 19) ausführt. Während dieser Schwenkbewegung gelangt der Schwenkriegel 15 in den Bereich des Anschlagteiles 16 (Ende der ersten Schließphase), und die Stützeinrichtung 46 am unteren Randbereich 38 der Heckklappe 2 liegt in einer Stützzone 52 am Seitenwandteil 4 an. In dieser Bewegungsphase wird nunmehr das während der Öffnungsbewegung der Heckklappe 2 vorgespannte Federspeicherelement 28 im Bereich des Schwenkriegels 15 als Betätigungsorgan wirksam, wobei die Gegenkraft des drucklos geschalteten Hebeorgans 13 überwunden und der Schließ- und Verriegelungsvorgang durch die Druckwirkung der Feder 28 herbeigeführt wird.

Unter Wirkung des Gewichts der Heckklappen-Bauteile wird der untere Randbereich 38 der Heckklappe 2 an dem Seitenwandteil 4 nach Art einer Führungsschräge parallel zu einer Seitenwand-Stützzone 52 geradlinig (Pfeil 20) weiter nach unten bewegt, wobei gleichzeitig eine geringfügige Dehnung des Federgliedes 40 eintritt. Es erfolgt dabei in diesem, den vollständigen Verschluß und die Verriegelung des Ladewagens herbeiführenden Verbindungsbereich einerseits mit der geradlinigen Schließbewegung (gemäß Pfeil 20) eine Einführung des Schließteiles 12 in den Bereich des Gegengliedes 10, und gleichzeitig verpreßt das Federspeicherglied 28 den unteren Randbereich 38 der Klappenwand 35 bzw. die gesamte Rückwand 34 derart mit den Boden- und Seitenwandteilen 4, 11 des Wagenaufbaus, daß dieser hinreichend dicht und sicher verschlossen ist.

Gleichzeitig mit der vorbeschriebenen Schließbewegung wird die Heckklappe 2 im Bereich der Antriebseinrichtung 5 so bewegt, daß der Schwenkriegel 15 in die Sicherungsstellung gelangt, wobei der Schwenkriegel 15 unter Wirkung seines Federspeicherelementes 28 entgegen der Hubrichtung des Hebeorgans 13 so verschwenkt wird (Pfeil 26, Fig. 4), daß der Riegelarm 25 das Anschlagteil 16 hintergreift (Fig. 1, Fig. 3) und so eine Sicherungsstellung erreicht ist. In dieser Schließstellung bildet das Rahmenteil 8 zur Heckklappe 2 hin einen im wesentlichen gleichmäßigen Abstand S (Fig. 1), der in Offenstellung der Heckklappe 2 eine sich zum Hauptschwenklager 9 hin reduzierende Größe S' aufweist

In der Schließstellung ist die Heckklappe 2 sowohl im Bereich der Schließteile 12 als auch im Bereich des Anschlagteiles 16 schwenkstabil festgelegt, und unter der Wirkung des Federspeicherglieds 28 in Verbindung mit den beiden unterschiedlichen, in Wagenlängsrichtung zueinander versetzten Drehpunkten 9 und 22 ist eine Erhöhung der Schwingstabilität der Heckklappe 2 erreicht, so daß bei einer Fahrbewegung des Ladewagens 2 auch bei hohen dynamischen Belastungen unter rauhen Betriebsbedingungen ein ungewolltes Öffnen der Heckklappe 2 mit hinreichender Sicherheit verhindert ist. Über ein Pufferelement 54 können dabei auftretende Geräuschbelastungen auf ein Minimum reduziert werden. Außerdem ist die Anordnung weiterer Fühlerelemente (nicht dargestellt) denkbar, mit denen über eine entsprechende Anzeigeeinheit im Fahrerhaus des Zugfahrzeugs jederzeit eine Kontrolle der Schließstellung der Heckklappe 2 möglich ist.

## Patentansprüche

1. Ladewagen zur Beförderung von insbesondere Erntegut, dessen aus einer Schließstellung in eine Offenstellung bewegliche Heckklappe (2) beidseits im Bereich jeweiliger Seitenwandteile (4) des Wagenaufbaus mit einer Antriebseinrichtung (5) versehen ist, wobei die Heckklappe (2) einenends in ihrem oberen Randbereich über eine jeweilige heckseitige Gelenkstelle (6) mit einem oberen Rahmenteil (8) verbunden ist, das seinerseits im Bereich der jeweiligen Seitenwandteile (4) des Wagenaufbaus von einem Hauptschwenklager (9) abgestützt ist, und wobei die Heckklappe (2) anderenends in ihrem unteren Endbereich (38) mit in bodenseitige Gegenglieder (10) einführbaren und aus diesen lösbaren schließteilen (12) versehen ist, **dadurch gekennzeichnet**, daß die Antriebseinrichtung (5) als ein in Richtung des oberen Rahmenteils (8) wirkendes Hebeorgan (13) ausgebildet ist und dieses an einem Schwenkriegel (15) angreift, der in Schließstellung der Heckklappe (2) an einem aufbaufesten Anschlagteil (16) in einer Verriegelungsstellung gehalten ist und nach einem Herausschwenken aus dieser ein Druckglied zum Anheben der Heckklappe (2) in die Offenstellung bildet.

2. Ladewagen nach Anspruch 1, dadurch gekennzeichnet, daß das Hebeorgan (13) von einem einfachwirkenden Kraftheber (17) gebildet ist.

3. Ladewagen nach Anspruch 1 oder 2, dadurch gekennzeichnet, daß der Schwenkriegel (15) über ein Verbindungslager (21) mit dem Rahmenteil (8) verbunden ist und das Verbindungslager (21) im Nahbereich des Hauptschwenklagers (9) von der Unterseite des Rahmenteils (8) in Richtung zum Hebeorgan (13) vorkragend gebildet ist.

4. Ladewagen nach einem der Ansprüche 1 bis 3, dadurch gekennzeichnet, daß der Schwenkriegel (15) von einem Winkelhebel (23) gebildet ist, der einerseits einen mit dem Hebeorgan (13) verbundenen Stützarm (24) aufweist und andererseits in Schließstellung das Anschlagteil (16) an der Seitenwand (4) mit einem Riegelarm (25) hintergreift.

5. Ladewagen nach Anspruch 4, dadurch gekennzeichnet, daß der Winkelhebel (23) in einem Bereich zwischen dem Riegelarm (25) und dem Stützarm (24) über ein Federspeicherelement (28) mit dem Rahmenteil (8) verbunden ist.

6. Ladwagen nach Anspruch 5, dadurch gekennzeichnet, daß das Federspeicherelement (28) von einer in vertikaler Einbaulage am Rahmenteil (8) festgelegten Druckfeder (29) gebildet ist, die mit ihrem freien Ende an einer Bogenkontur (30) des Winkelhebels (23) schwenkbeweglich abgestützt ist.

7. Ladewagen nach einem der Ansprüche 4 bis 6, dadurch gekennzeichnet, daß das Verbindungslager (21) einen von zwei Stützplatten (32, 33) gebildeten Lagerbock umfaßt, mit dem der Stützarm (24) nahe seinem freien Ende verbunden ist.

8. Ladewagen nach einem der Ansprüche 1 bis 7, dadurch gekennzeichnet, die Heckklappe (2) ausgehend von der heckseitigen Gelenkstelle (6) in ihrer Schließstellung mit ihrer Rückwand (34) mit dem Rahmenteil (8) einen spitzen Winkel (W) einschließt und seitliche Klappenwände (35) aufweist, deren vorderer Rand (36) einen oberen, im wesentlichen senkrechten Randbereich (37) und einen unteren, zum Aufbauboden (11) geneigten Randbereich (38) umfaßt.

9. Ladewagen nach einem der Ansprüche 1 bis 8, dadurch gekennzeichnet, daß die Heckklappe (2) und das Rahmenteil (8) im Bereich zwischen dem Hauptschwenklager (9) und der Gelenkstelle (6) über ein Federglied (40) miteinander verbunden sind.

10. Ladewagen nach Anspruch 8 oder 9, dadurch gekennzeichnet, daß das Federglied (40) mit einer im wesentlichen parallel zum oberen Randbereich (37) der seitlichen Klappenwand (35) verlaufenden Wirkrichtung (41) zwischen dem Rahmenteil (8) und der seitlichen Klappenwand (35) abgestützt ist.

11. Ladewagen nach Anspruch 10, dadurch gekennzeichnet, daß das Federglied (40) von einer Schraubenzugfeder (42) gebildet ist, die einenends mit einem eine heckklappenseitige Führungsöffnung (43) durchgreifenden Führungsglied (44) am Rahmenteil (8) und anderenends über ein Einstellglied (45) an der Heckklappe (2) festgelegt ist.

12. Ladewagen nach einem der Ansprüche 1 bis 11, dadurch gekennzeichnet, daß die Heckklappe (2) im Bereich der bodenseitigen Schließteile (12) über eine vorstehende Stützeinrichtung (46) an dem jeweiligen Seitenwandteil (4) anliegt.

13. Ladewagen nach einem der Ansprüche 1 bis 12, dadurch gekennzeichnet, daß das Schließteil (12) als ein parallel zur Seitenwand (4) am unteren Endbereich (38) der Heckklappe (2) abgestützter Winkelprofilhaken (47) ausgebildet ist, dessen freier Schenkel (48) das bodenseitige Gegenglied (10) hintergreift.

14. Ladewagen nach einem der Ansprüche 1 bis 13, dadurch gekennzeichnet, daß der Schwenkriegel (15) im Bereich des Stützarms (24) mit einem am Verbindungslager (21) abgestützten Fühlerelement (49) verbunden ist.

15. Ladewagen nach Anspruch 14, dadurch gekennzeichnet, daß der Stützarm (24) einen mit einer optischen und/oder akustischen Anzeigeeinheit verbundenen Näherungsschalter (50) umfaßt oder mit einem solchen in Wirkverbindung steht.
